# EUROPÄISCHE PATENTSCHRIFT

(11) **EP 1 488 080 B1**
(45) Veröffentlichungstag und Bekanntmachung des Hinweises auf die Patenterteilung: **11.10.2006**
(21) Anmeldenummer: 03720193.6
(22) Anmeldetag: 17.03.2003
(51) Int. Cl.: F01K 17/00, F01K 17/04

(54) **KRAFTWERK ZUR KÄLTEERZEUGUNG**
REFRIGERATION POWER PLANT
CENTRALE DE PRODUCTION DE FROID

(30) Priorität: 28.03.2002 DE 10214183
(43) Veröffentlichungstag der Anmeldung: 22.12.2004
(73) Patentinhaber: SIEMENS AKTIENGESELLSCHAFT, 80333 München (DE)
(72) Erfinder: STUHLMÜLLER, Franz, 91052 Erlangen (DE)
(86) Internationale Anmeldenummer: PCT/DE2003/000857
(87) Internationale Veröffentlichungsnummer: WO 2003/083268

(56) Entgegenhaltungen:
- US-A- 2 548 508
- US-A- 3 041 853
- US-A- 4 942 734
- MONE C D ET AL: "Economic feasibility of combined heat and power and absorption refrigeration with commercially available gas turbines" , ENERGY CONVERSION AND MANAGEMENT, ELSEVIER SCIENCE PUBLISHERS, OXFORD, GB, VOL. 42, NR. 13, PAGE(S) 1559-1573 XP004249134 ISSN: 0196-8904 Seite 1562, Zeile 4 -Seite 1565, Zeile 12; Abbildung 1
- "MIT WAERME KUEHLEN" , BWK BRENNSTOFF WARME KRAFT, VDI VERLAG GMBH. DUSSELDORF, DE, VOL. 51, NR. 1/2, PAGE(S) 26-27 XP000803484 ISSN: 0006-9612 das ganze Dokument

## Beschreibung

Die Erfindung betrifft die Verwendung eines Kraftwerks mit mindestens einer Dampfturbine und/oder mindestens einer Gasturbine.

Kraftwerke dieser Art sind z.B aus US 4 942 734 und aus US 3 041 853 bekannt.

Eine der wichtigsten technischen Aufgaben der Gegenwart ist der sparsame Umgang mit den verfügbaren Energieträgern bei der Erzeugung und dem Verbrauch von Energie.

Zur Erzeugung von elektrischer Energie, aber auch zur Auskopplung von Fernwärme, werden häufig hinsichtlich ihrer installierten Leistung große Kraftwerksanlagen verwendet, welche eine zentrale Versorgung vieler Verbraucher und großer Gebiete mit elektrischer Energie und Fernwärme sicherstellen.

Eine derartige zentrale Versorgung mit elektrischer und Wärmeenergie ist im Vergleich zu einer dezentralen Versorgung mit vielen kleineren Inselanlagen kostengünstig und besonders wirtschaftlich betreibbar.

Diese bekannte, sogenannte Kraft-Wärme-Kopplung ist praktisch unabhängig vom eingesetzten Kraftwerkstyp, der Kraftwerksgröße und dem verwendeten Brennstoff. Entscheidend ist dabei lediglich, dass eine Wärmequelle mit geeigneter primärseitiger Temperatur für die Erwärmung eines Heizmediums zur Verfügung steht. Als Heizmedium wird heute fast ausschließlich Heißwasser eingesetzt.

Zur Realisierung der bekannten Kraft-Wärme-Kopplung wird meist Wärme aus dem Kraftwerksprozess ausgekoppelt, welche ansonsten ganz oder zumindest großteils ungenutzt als Abwärme an die Umgebung abgegeben werden müsste.

Als Wärmequelle für eine derartige Kraft-Wärme-Kopplung kann beispielsweise Dampf einer Dampfturbine verwendet werden, welcher beispielsweise einem Niederdruckteil der Dampfturbine entnommen wird. Das Heizmedium kann dann von dem Entnahmedampf erwärmt werden, indem dieser mittels Wärmetausch seine in ihm enthaltene Kondensationswärme an das Heizmedium abgibt.

Eine derartige Versorgung mit Wärme mittels der beschriebenen Kraft-Wärme-Kopplung ist besonders wirtschaftlich, da ansonsten ungenutzte Prozesswärme nutzbar gemacht wird, beispielsweise zur Beheizung von Gebäuden.

Entgegen der genannten zentralen Versorgung mit elektrischer und Wärmeenergie ist es heute zur Erzeugung von Kälte bekannt, diese fast ausschließlich dezentral, meist in Blockheizkraftwerken, oder direkt vor Ort, meist in den Haushalten selbst, zu erzeugen.

Eine derartige dezentrale Kälteversorgung ist sehr kosten- und energieintensiv, da entweder zur Versorgung von Verbrauchern mit großem Kältebedarf eigens Blockheizkraftwerke errichtet werden müssen oder dass im Falle der Kälteversorgung direkt im Haushalt eine große Menge an elektrischer Energie aufgewendet werden muss, um die gewünschte Kältemenge zu erzeugen.

Der Erfindung liegt daher die Aufgabe zugrunde, eine ökonomische Erzeugung von Kälte anzugeben.

Zur Lösung dieser Aufgabe ist die Verwendung eines Kraftwerkes vorgesehen, welches neben einem Bedarf an mechanischer (im Allgemeinen: elektrischer) Energie auch einen großen Kältebedarf wirtschaftlich decken kann, und dabei flexibel einsetzbar ist und insbesondere die genannten Nachteile bekannter Vorrichtungen zur Kälteerzeugung überwindet.

Die Aufgabe wird erfindungsgemäß gelöst durch die Verwendung eines Kraftwerkes gemäß dem Anspruch 1.

Die Erfindung geht dabei von der Überlegung aus, dass Kraftwerke, welche einen Clausius-Rankine-Kreisprozess beinhalten, sehr gute Voraussetzungen für die Integration einer Kälteerzeugungsvorrichtung bieten.

Derartige Kraftwerke mit Wasser-Dampf-Kreislauf enthalten systembedingt eine Reihe von Systemen, welche auf einfache Weise zur Ankopplung einer Absorptionskältemaschine genutzt werden können.

Zur Kälteerzeugung benutzt man meist einen Kreislauf, bei dem ein flüssiges Kältemittel (z.B. Ammoniak) derart entspannt wird, dass es in die dampfförmige Phase übergeht und dabei Wärme aus einem Kühlraum, einem Kühlwasserkreislauf oder einem anderen Anlagenteil aufnimmt. Anschließend wird der Dampf des Kältemittels komprimiert und diese Wärme außerhalb des genannten Anlagenteils durch Kühlung wieder abgegeben. Für Klimaanlagen wird häufig Wasser als Kältemittel verwendet, da es bei einem Druck nahe dem Vakuum bei etwa 4°C verdampft, also einem Kühlwasserkreislauf ein Kaltwasservorlauf von etwa 6°C zur Verfügung gestellt werden kann.

Gemäß dem Prinzip einer Absorptionskältemaschine wird der Kältemitteldampf dadurch komprimiert, dass er in einer Lösung (z.B. in einer wässrigen Lithiumbromidlösung, wenn Wasser als Kältemittel verwendet wird) absorbiert, dann durch Aufheizen der Lösung wieder ausgetrieben und in die flüssige Phase versetzt wird. Statt eines mechanischen Kompressors, der einem Verschleiß unterliegt und mechanische bzw. elektrische Energie verbraucht, wird also ein Austreiber verwendet, der überwiegend (oder sogar ausschließlich) mit Wärmeenergie betrieben wird, wobei nun das Abführen der beim Verdampfen und dem Austreiben aufgenommenen Wärme eine entscheidende Rolle spielt.

Diese Wärmeabfuhr kann vorteilhaft in einem Kühlturm oder einem Zellenkühler vorgenommen werden, wie er in vielen Kraftwerken, beispielsweise Kondensations-Kraftwerken, ohnehin vorhanden ist

Zum Betrieb einer Absorptionskältemaschine ist es also ebenso wie bei der Erzeugung von Heizwärme erforderlich, dass eine Wärmequelle zur Verfügung steht, welche bevorzugt eine Temperatur von ca. 100 °C bis 120 °C aufweist. Bei der vorliegenden Erfindung wird als Wärmequelle Entnahmedampf aus der Dampfturbine verwendet.

Beim Einsatz der Erfindung in einem Gasturbinen- oder Gas- und Dampf-Kraftwerk, kommt als Wärmequelle auch das heiße Abgas der Gasturbine in Frage, welches beispielsweise in Strömungsrichtung des Abgases hinter oder im Bereich des Endes eines Abhitzekessels entnommen und zum Wärmetausch mit dem Heizmedium verwendet wird.

Die Erfindung führt daher auch zu einem Kraftwerk, welches mindestens eine Gasturbine umfasst und bei welchem zur Erzeugung von Kälte mindestens eine Absorptionskältemaschine mit der Gasturbine verbunden ist, wobei die Absorptionskältemaschine mittels Abhitze der Gasturbine betrieben ist.

Vorteilhaft ist bei einem derartigen Kraftwerk die Absorptionskältemaschine zusätzlich oder alternierend zur Kühlung anderer Kälteverbraucher auch zur Kühlung von Ansaugluft der Gasturbine einsetzbar.

Es ist bei sehr vielen bestehenden Kraftwerken, welche eine Dampfturbine umfassen, auf einfache Weise möglich, aus der Dampfturbine Dampf auszukoppeln und damit eine Absorptionskältemaschine zu betreiben; somit ist es in sehr vielen Fällen mit geringem Aufwand möglich, bestehende Kraftwerke um die Funktion einer zentralen Kälteversorgung zu erweitern.

Neben der erforderlichen Wärmequelle zu Betrieb der Absorptionsmaschine enthält diese auch Komponenten, welche gekühlt werden müssen. Es handelt sich dabei beispielsweise um einen unter Vakuum stehenden Behälter, welcher die vorher genannte Lithium-Bromid-Lösung enthält und gekühlt werden muss oder um einen dem Vakuum vorgeschalteten Kondensator.

Derartige zu kühlende Komponenten der Absorptionskältemaschine können beispielsweise gleichzeitig zusammen mit einem Kondensator der Dampfturbine, welcher ohnehin vorhanden und mit Kühlwasser versorgt ist, mit Kühlwasser versorgt werden, wobei dieses Kühlwasser unter dem Temperatureinfluss der Umgebung steht und daher für die genannten Kühlzwecke eine Temperatur aufweist, die niedrig genug ist. Es kann sich dabei beispielsweise um Wasser handeln, welches einem Fluss oder einem anderen Gewässer entnommen ist, das sich nahe bei dem Kraftwerk befindet. Daher stellt die Umgebung im Vergleich zu den kühlungsbedürftigen Komponenten eine Wärmesenke dar, so dass Kühlwasser, das in dieser Wärmesenke geführt und den zu kühlenden Komponenten zugeleitet wird, zu Kühlzwecken sehr gut geeignet ist, ohne dass weitere Maßnahmen, beispielsweise zur Temperaturerniedrigung des Kühlwassers, ergriffen werden müssen. Hier liegt auch ein großer Vorteil der Erfindung, da bei bekannten Vorrichtungen zur dezentralen Kälteversorgung oft das Problem auftritt, ein geeignetes Kühlmedium bereitzustellen, welches bei der Kühlung der zu kühlenden Komponenten genügend Energie aufnehmen kann.

Ein weiterer Vorteil der Erfindung besteht darin, dass eine Absorptionskältemaschine eine robuste und unempfindliche Technik darstellt, bei der höchstens Flüssigkeitsumwälzpumpen eingesetzt werden müssen und bei welcher keine Gaskompression stattfindet, wie bei den bekannten Kompressionskältemaschinen. Eine Absorptionskältemaschine umfasst daher in ihren wesentlichen Bestandteilen praktisch keine beweglichen Teile und ist daher sehr wartungsarm.

Darüber hinaus weist eine Absorptionskältemaschine nur einen sehr geringen elektrischen Eigenbedarf auf.

In einer vorteilhaften Ausgestaltung der Erfindung ist mindestens ein Teil des der Dampfturbine entnommenen Dampfs einem Wärmetauscher zur Erwärmung eines Heizmediums, bevorzugt Heißwasser, zuführbar.

In dieser Ausgestaltung der Erfindung ist das Kraftwerk derart erweitert, dass neben der Erzeugung von Kälte auch eine Erzeugung von Wärme vorgesehen ist. Dabei wird mittels des der Dampfturbine entnommenen Dampfs neben der Absorptionskältemaschine nun auch ein Wärmetauscher betrieben, mittels welchem Wärmeverbrauchern Wärmeenergie zugeführt wird. Es kann sich dabei beispielsweise um Heizvorrichtungen, z.B. für Gebäude handeln, welche mittels eines Heißwasserstroms betrieben sind. Die zur Erwärmung des Heißwasserstroms erforderliche Wärmeenergie wird dem der Dampfturbine entnommenen Dampf durch Wärmetausch entnommen.

In dieser Ausgestaltung der Erfindung ist deutlich eine Kraft-Wärme-Kälte-Kopplung zur zentralen Versorgung von Verbrauchern mit elektrischer Energie, Kälte und Wärme realisiert.

Der Austreiber der Absorptionsmaschine kann direkt mit dem Entnahmedampf betrieben sein oder auch indirekt mittels Wärmetausch mit einem Austreiber-Heizmedium, beispielsweise Wasser. Der Entnahmedampf kann auch einer Klimaanlage zugeführt sein wobei diese einen Umschalter aufweisen kann, mittels welchem der Entnahmedampf wahlweise dem Austreiber der Absorptionskältemaschine (z.B. zur Erzeugung von Kälte im Sommer zu Kühlzwecken) oder dem Wärmetauscher (z.B. zur Erzeugung von Wärme im Winter zu Heizzwecken); die Absorptionskältemaschine und/oder der Wärmetauscher sind dabei von der Klimaanlage umfasst.

In einer weiteren vorteilhaften Ausgestaltung der Erfindung umfasst das Kraftwerk weiterhin mindestens eine Gasturbine, deren Abhitze zum Erzeugen von Betriebsdampf für die Dampfturbine genutzt ist, wobei die Absorptionskältemaschine zusätzlich oder alternierend zur Kühlung anderer Kälteverbraucher auch zur Kühlung von Ansaugluft der Gasturbine einsetzbar ist.

Bei dieser Ausgestaltung der Erfindung handelt es sich um eine sogenannte Gas- und Dampf-Anlage (GuD-Anlage), welche zur Kälteerzeugung die Absorptionskältemaschine umfasst.

Beim Betrieb der Gasturbine wird Luft angesaugt, welche zur Erreichung einer Leistungssteigerung vorteilhaft zu kühlen ist. Bei der vorliegenden Ausführungsform der Erfindung ist die Kälteerzeugung der Absorptionskältemaschine zumindest teilweise und/oder vorübergehend für diese Kühlung der Ansaugluft vorgesehen, nämlich besonders in denjenigen Betriebsfällen des Kraftwerks, in denen zu kühlende Verbraucher, welche mit der Absorptionsmaschine verbunden sind, nicht das gesamte Kältepotential der Absorptionskältemaschine ausschöpfen und folglich ein überschüssiges Kälteangebot zur Verfügung steht, das nun zur Kühlung der Gasturbinen-Ansaugluft verwendet wird.

Dadurch ist eine Leistungserhöhung der Gasturbine erreicht. Ferner sind dadurch auch Schwankungen in der Kälteabnahmemenge reduziert, so dass insbesondere ein gleichmäßiger Betrieb der Absorptionskältemaschine sichergestellt ist.

Die vorgeschlagene Erfindung in all ihren Ausführungsformen eignet sich beispielsweise zur Klimatisierung von Wohngebieten, großen Wohnblocks, Bürobauten, Industrieparks, Hotels, Krankenhäuser, öffentliche Einrichtungen usw. Bevorzugte Einsatzorte der Erfindung können dabei insbesondere die heißeren Klimazonen der Erde sein, in welchen derart hohe Umgebungstemperaturen herrschen, dass eine Klimatisierung erforderlich und/oder gewünscht ist.

Weitere mögliche Einsatzorte sind beispielsweise Ferienzentren in tropischen und subtropischen Gebieten.

Im Folgenden wird ein Ausführungsbeispiel der Erfindung näher dargestellt.

Es zeigt:
- FIG 1: ein Kraftwerk, welches als GuD-Anlage ausgeführt ist, und
- FIG 2: ein Kraftwerk mit einer Gasturbine.

Die Figur zeigt schematisch ein Kraftwerk 1, welches als GuD-Anlage ausgeführt ist und eine Dampfturbine 5 sowie eine Gasturbine 30 umfasst.

Der Betriebsdampf B der Dampfturbine 5 wird dabei mittels der Abhitze A der Gasturbine 30 bereitgestellt.

Die Dampfturbine 5 umfasst einen Hochdruckteil 7 sowie einen Niederdruckteil 9.

Eine Absorptionskältemaschine 10 wird mittels Entnahmedampf 12, welcher als Wärmequelle genutzt ist, betrieben. Dabei wird dieser Entnahmedampf 12 einem Austreiber 14 der Absorptionskältemaschine 10 zugeführt, welcher den Absorptionsprozess der Absorptionskältemaschine 10 in Gang hält. Der Ausgang des Austreibers 14 ist über eine Pumpe 41 mit einer Heizfläche 38 verbunden, welche durch die Abhitze A der Gasturbine 30 erhitzt ist, um den für den Betrieb der Dampfturbine 5 erforderlichen Betriebsdampf B zu erzeugen. Das Abgas der Gasturbine 30 wird nach dem Wärmetausch mit der Heizfläche 38 einem Kühlturm 36 zugeführt.

Die Absorptionskältemaschine 10 arbeitet in diesem Beispiel mit einem Kreislauf für eine Lithium-Bromid-Lösung, die im Kreislauf geführt und dabei zur Abgabe von flüssigem Wasser im Austreiber 14 durch den Entnahmedampf aufgeheizt und anschließend zur Absorption von Wasserdampf in einem Wasserdampfabsauger 16 wieder abgekühlt wird. Der Wasserdampfabsauger 16 ist also eine kühlungsbedürftige Komponente und wird mit Kühlwasser K versorgt, das beispielsweise parallel zur Kühlung eines Kondensators 15 der Dampfturbine 5 verwendet und beispielsweise aus einem Kühlturm 25 entnommen ist.

Der Hochdruckteil 7 und der Niederdruckteil 9 der Dampfturbine 5 sind im vorliegenden Ausführungsbeispiel über eine Heizfläche 39 beispielsweise zur Zwischenüberhitzung des teilentspannten Dampfs, miteinander verbunden.

Zur Erzeugung von elektrischer Energie sind die Dampfturbine 5 sowie die Gasturbine 30 je an einen Generator G gekoppelt. Die Erzeugung von Kälte mittels der Absorptionskältemaschine 10 geschieht mittels eines Verdampfers 13, welcher unter einem sehr niedrigen Druck, insbesondere nahe dem Vakuum steht. Dies hat zur Folge, dass Wasser, welches mittels des Verdampfers 13 verdampft werden soll, schon bei einer sehr niedrigen Temperatur, beispielsweise 4 °C, verdampft. Der dabei entstehende Dampf wird mittels des Wasserdampfabsaugers 16 aus dem Verdampfer 13 abgesaugt. Dies hat zur Folge, dass Wasser, welches durch den Verdampfer 13 geführt ist, infolge der im Verdampfer herrschenden praktisch konstanten niedrigen Temperatur auf einen Wert nahe dieser niedrigen Temperatur abgekühlt ist, so dass ein Vorlaufkühlwasserstrom 45 zur Kühlung von Kälteverbrauchern 32 mit einer niedrigen konstanten Temperatur erzeugt ist.

Die Absorptionskältemaschine 10 wird bei der vorliegenden Ausführungsform der Erfindung weiterhin dazu benutzt, um mittels des Vorlaufkühlwasserstroms weiterhin eine Kühlfläche 34 zu betreiben, so dass Ansaugluft L für die Gasturbine 30 gekühlt ist. Dadurch ist eine Leistungssteigerung der Gasturbine erreicht. Außerdem kann durch die Kombination beider Maßnahmen, nämlich der Versorgung der Kälteverbraucher 32 sowie der Abkühlung der Ansaugluft L eine konstante Kälteabnahmemenge der Absorptionskälte der Absorptionskältemaschine 10 erreicht werden.

Der Entnahmedampf 12 aus dem Niederdruckteil 9 der Dampfturbine 5 ist weiterhin dazu genutzt, um mittels eines Wärmetauschers 20 ein Heizmedium 28 zu erwärmen, so dass mittels des Heizmediums 28 Wärmeverbraucher 27 mit Wärmeenergie versorgt werden können.

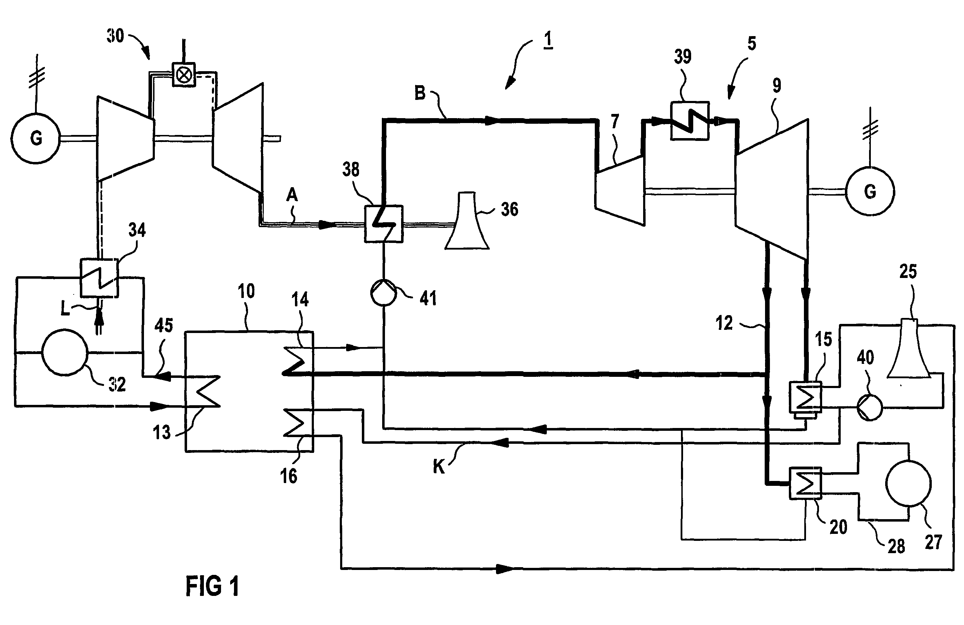

Durch die in der Figur 1 dargestellte Ausführungsform der Erfindung ist also eine Kraft-Kälte-Wärme-Kopplung realisiert, welche sich insbesondere zur zentralen Versorgung einer großen Anzahl von Verbrauchern mit den genannten Arten von Energie eignet.

Ähnlich dem bekannten Fernwärmenetz bekannter Kraft-Wärme-Kopplungen ist es durch die Erfindung möglich, darüber hinaus ein Fernkältenetz zur zentralen Kälteversorgung zu realisieren, und damit beispielsweise die Klimatisierung großer Gebäudekomplexe mit großem Kältebedarf zu verwirklichen.

Dies ist insbesondere in heißeren Klimazonen der Erde interessant, in denen ein großer Kälte- und Klimatisierungsbedarf besteht. Durch den Einsatz der Erfindung kann die Versorgung mit elektrischer, Wärme- und Kälteenergie sichergestellt werden.

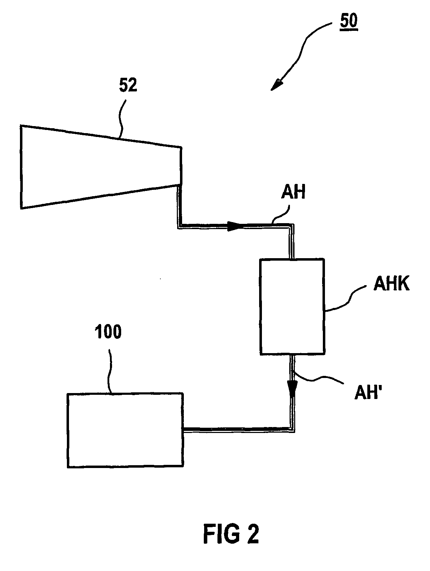

Figur 2 zeigt ein Kraftwerk 50 mit einer Gasturbine 52, deren Abhitze AH einem Abhitzekessel AHK zugeführt wird; die den Abhitzekessel AHK verlassende Abhitze AH' wird hier zum Betrieb einer Absorptionskältemaschine 100 benutzt. Details über die Ausführungsform und weiteren Anschluss des Abhitzekessels, sowie weitere Details des Kraftwerks 50 sind hier nicht näher dargestellt.

## Patentansprüche

1. Verwendung eines Kraftwerks (1), umfassend mindestens eine Dampfturbine (5), wobei zur Erzeugung von Kälte mindestens eine Absorptionskältemaschine (10) mit der Dampfturbine (5) verbunden ist, und wobei die Absorptionskältemaschine (10) mittels Dampf (12), welcher der Dampfturbine (5) entnommen ist, bevorzugt Entnahmedampf (12) aus einem Niederdruckteil (9) der Dampfturbine (5), betrieben wird, zur zentralen Klimatisierung einer Anzahl an Gebäuden.

2. Verwendung nach Anspruch 1,
wobei mindestens ein Teil des der Dampfturbine (5) entnommenen Dampfs (1) einem Wärmetauscher (20) zum Erwärmen eines Heizmediums (28), bevorzugt Heißwasser, zugeführt wird.

3. Verwendung nach einem der Ansprüche 1 oder 2,
wobei das Kraftwerk (1) weiterhin mindestens eine Gasturbine (30) umfasst, deren Abhitze zum Erzeugen von Betriebsdampf (B) für die Dampfturbine (5) genutzt wird, wobei die Absorptioriskältemaschine (10) zusätzlich oder alternierend zur Kühlung anderer Kälteverbraucher (32) auch zur Kühlung von Ansaugluft (L) der Gasturbine (30) eingesetzt wird.

4. Verwendung eines Kraftwerks (50),
umfassend mindestens eine Gasturbine (52), wobei zur Erzeugung von Kälte mindestens eine Absorptionskältemaschine (100) mit der Gasturbine (52) verbunden ist, wobei die Absorptionskältemaschine (100) mittels Abhitze (AH,AH') der Gasturbine (52) betrieben wird, zur zentralen Klimatisierung einer Anzahl an Gebäuden.

5. Verwendung nach Anspruch 4, wobei die Absorptionskältemaschine (100) zusätzlich oder alternierend zur Kühlung anderer Kälteverbraucher (32) auch zur Kühlung von Ansaugluft (L) der Gasturbine (30) eingesetzt wird.

## Claims

1. Use of a power station (1), comprising at least one steam turbine (5), wherein, for generating refrigeration, at least one absorption-type refrigeration machine (10) is linked to the steam turbine (5), and wherein the absorption-type refrigeration machine (10) is operated by means of steam (12) taken from the steam turbine (5), preferably extracted steam (12) from a low-pressure section (9) of the steam turbine (5), for the purpose of centralised air conditioning of a plurality of buildings.

2. Use according to claim 1,
wherein at least a part of the steam (1) taken from the steam turbine (5) can be routed to a heat exchanger (20) for heating a heating medium (28), preferably hot water.

3. Use according to one of the claims 1 or 2,
wherein the power station (1) furthermore includes at least one gas turbine (30) whose waste heat is used for generating operating steam (B) for the steam turbine (5), the absorption-type refrigeration machine (10) being used, additionally or alternately to refrigerating other consumers (32) of refrigeration, also for cooling intake air (L) for the gas turbine (30).

4. Use of a power station (50),
comprising at least one gas turbine (52) wherein, for generating refrigeration, at least one absorption-type refrigeration machine (100) is linked to the gas turbine (52), the absorption-type refrigeration machine (100) being operated by means of waste heat (AH,AH) of the gas turbine (52), for the purpose of centralised air conditioning of a plurality of buildings.

5. Use according to claim 4, wherein the absorption-type refrigeration machine (100) is used, additionally or alternately to refrigerating other consumers (32) of refrigeration, also for cooling intake air (L) for the gas turbine (30).

## Revendications

1. Utilisation d'une centrale (1) électrique comprenant au moins une turbine (5) à vapeur, au moins une machine (10) frigorifique à absorption étant, pour la production de froid, reliée à la turbine (5) à vapeur et la machine (10) frigorifique à absorption fonctionnant au moyen de vapeur (12) qui est prélevée de la turbine (5), de préférence de la vapeur (12) prélevée d'une partie (9) basse pression de la turbine (5) à vapeur, pour le conditionnement d'air central d'un certain nombre de bâtiments.

2. Utilisation suivant la revendication 1,
dans laquelle au moins une partie de la vapeur à prélever de la turbine (5) à vapeur est envoyée à un échangeur de chaleur (20) pour réchauffer un fluide (28) de chauffage, de préférence de l'eau chaude.

3. Utilisation suivant la revendication 1 ou 2,
dans laquelle la centrale (1) électrique comprend en outre au moins une turbine (30) à gaz, dont la chaleur perdue est utilisée pour produire de la vapeur (B) de fonctionnement pour la turbine (5) à vapeur, la machine (10) frigorifique à absorption étant utilisée supplémentairement ou en alternance pour le refroidissement d'autres consommateurs(32) de froid également pour refroidir de l'air (L) d'aspiration de la turbine (30) à gaz.

4. Utilisation d'une centrale (50) électrique,
comprenant au moins une turbine (52) à gaz, au moins une machine (100) frigorifique à absorption étant, pour la production du froid, reliée à la turbine(52) à gaz, la machine (100) frigorifique à absorption fonctionnant au moyen de la chaleur (AH, AH')perdue de la turbine (52) à gaz pour le conditionnement d'air central d'un certain nombre de bâtiments.

5. Utilisation suivant la revendication 4,
dans laquelle la machine (100) frigorifique à absorption est utilisée, supplémentairement ou en alternance pour le refroidissement d'autres consommateurs (32) de froid, également pour refroidir de l'air (L) d'aspiration de la turbine (30)à gaz.
